# EUROPEAN PATENT APPLICATION

(11) **EP 2 070 684 A1**
(43) Date of publication of application: **17.06.2009**
(21) Application number: 07828301.7
(22) Date of filing: 21.09.2007
(51) Int. Cl.: B29C 55/14, B29K 67/00

(54) **PROCESS FOR THE PRODUCTION OF POLYLACTIC ACID FILM**

(30) Priority: 21.09.2006 JP 2006255301
(71) Applicant: Asahi Kasei Home Products Corporation, Tokyo 101-8101 (JP)
(72) Inventor: HASHIMOTO, Satoshi, Tokyo 100-8440 (JP); IRIYA, Masaru, Tokyo 100-8440 (JP)
(74) Representative: Bradley, Josephine Mary
(86) International application number: PCT/JP2007/068381
(87) International publication number: WO 2008/035762

(57) **Abstract**

The invention relates to the sequential biaxial stretching of a thin film made of a polylactic acid resin containing as large an amount of a plasticizer as 10 to 50 wt% and aims at solving the problematic grip failure in the widthwise stretching step which failure is caused by the lowering in film flatness occurring in gripping the film with clips continuously. A process for the production of polylactic acid film which comprises subjecting an unstretched film of a polylactic acid resin containing 10 to 50 wt% of a plasticizer to lengthwise stretching under such conditions as to give a lengthwise stretched film having a thickness of 12 to 100 µm and then subjecting the lengthwise stretched film to widthwise stretching with a tenter for widthwise stretching to form a sequentially biaxially stretched film, **characterized in that** the clip temperature of the tenter in bringing the lengthwise stretched film passed through guide rolls into contact with the clips and making the film bitten by the clips is adjusted to 70°C or below.

## Description

### TECHNICAL FIELD

The present invention relates to a novel technique that solves a trouble in film forming of a thin polylactic acid film having flexibility to which a plasticizer is added, which was not found in conventional polyolefin resins or polyester resins, and that enables stable production of a film.

### BACKGROUND ART

Heretofore, films using polyethylene or polypropylene as a raw material have been widely used. Most of the films are used for wrapping of food, miscellaneous goods, machines, electronic parts, chemicals or cosmetics, and are disposed after use. However, raw materials of these films have a high calorific value and so damage combustion furnaces when incinerated. Alternatively, these waste materials are also disposed in landfill, but finding sites for such landfill remains a problem.
Under such circumstances, resins that have low combustion calories upon incineration or resins whose volume can be reduced by means other than incineration are in demand. In response to this, using a polylactic acid resin composed mainly of lactic acid derived from a plant as a raw material of a film is being studied. Polylactic acid has combustion calories of less than half that of polyethylene and has characteristics that it is hydrolyzed under water rich conditions such as compost and the resulting hydrolyzed substance is detoxified by decomposition by microorganisms.

Polylactic acid resins are characteristically weak although they have as high a rigidity as that of polystyrene. Since most wrapping films need flexibility and high strength as polyethylene films do, polylactic acid resins must be modified to have such properties. As a technique of giving flexibility, copolymerization with a soft component and addition of a soft resin or a plasticizer are known (Patent Document 1). Also, as a method for improving mechanical strength, stretching treatment is known. In particular, biaxial orientation makes it possible to produce excellent mechanical strength (Patent Document 2).

Industrial methods of film stretching of polylactic acid resin include sequential biaxial stretching methods, simultaneous biaxial stretching methods and multiaxial stretching methods. In sequential biaxial stretching methods, generally melt-extruded film is rapidly cooled and subsequently longitudinal stretching is performed using a multi-stage roll followed by transverse stretching using a tenter. In simultaneous biaxial stretching methods, a machine is often used in which melt-extruded and rapidly cooled film is introduced to a tenter and the distance between clips that hold the film is extended simultaneously in the flow direction and the width direction. Of multiaxial stretching methods, inflation methods are common in which molten resin is extruded in a tubular shape, once rapidly cooled, then heated again and stretched by pressurizing from inside the tube. Simultaneous biaxial stretching methods involve high investment costs due to complicated machines and are less productive because of the low upper limit of the line speed. Inflation methods are difficult to put to practical use because heat setting treatment while being fixed after stretching, which is necessary for polylactic acid resin, is difficult.

Film stretching of polylactic acid resin is generally performed by a sequential biaxial stretching process (see, for example, Patent Document 3). In sequential biaxial stretching methods, resin molten in an extruder is extruded in the form of a sheet through a T die and rapidly cooled by bringing the sheet into contact with a rotating casting roll.
The rapidly cooled extruded film is then stretched in the flow direction by a longitudinal stretching machine. Generally a roll type stretching machine using a group of rotating rolls with different peripheral speeds is used. The rolls include a pre-heating roll group, a stretching roll group and a cooling roll group. The film is previously heated by contacting with heated pre-heating rolls.
Subsequently, by passing through front and back rolls of different peripheral speeds, the film is stretched in the flow direction. The film is heated to a stretching temperature by contacting with heated stretching rolls. In some methods, portions to be stretched are heated using infrared ray or far-infrared ray apparatus. For combination of rolls of different peripheral speeds, a set of rolls may be used, but generally plural sets of rolls are used to perform multi-stage stretching. The film stretched in the flow direction is cooled and set by contacting with a cooling roll.

The film stretched in the flow direction is stretched in the width direction by a transverse stretching machine. Generally a tenter type stretching machine with an endless chain to which clips are attached is used. The clips pass through a pre-heating zone, a stretching zone, a heat setting zone and a cooling zone along a rail. A film held by the clips on both edges at the tenter entrance is previously heated by hot air or the like in the pre-heating zone. In the stretching zone, the distance between the clips on both edges is extended so that the film is stretched in the width direction. Subsequently, heat setting treatment is performed with a width employed in stretching or a width narrower than that at a temperature higher than the stretching temperature. When the stretching temperature and the heat setting temperature are widely different, a neautral zone is often set to avoid interference of hot air. After completion of crystallization of the film in the heat setting zone, the film is cooled by cold air in the cooling zone. Thereafter, the film is released from the clips and transferred to a winder.

Polylactic acid has a glass transition temperature of about 60°C and when 10% by weight or more of a plasticizer is added, the glass transition temperature is further dropped to 40°C or lower. In addition, polylactic acid has a characteristic of extremely low rigidity in an amorphous state compared to the rigidity in a crystallized state. In other words, in a step of stretching a polylactic acid film to which a plasticizer is added, it is necessary to process an amorphous, extremely soft film at a temperature higher than the glass transition temperature.
In particular, in a sequential biaxial stretching process, an essential problem arises when holding a longitudinally stretched film by clips of a tenter.

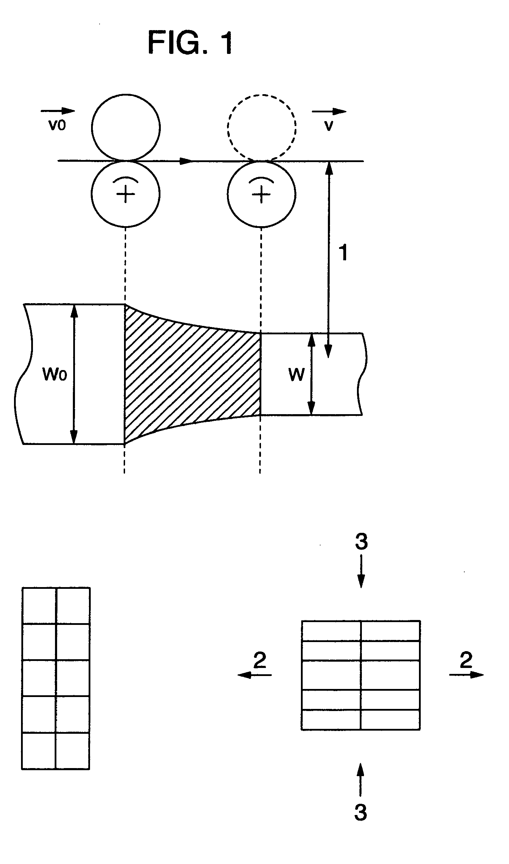

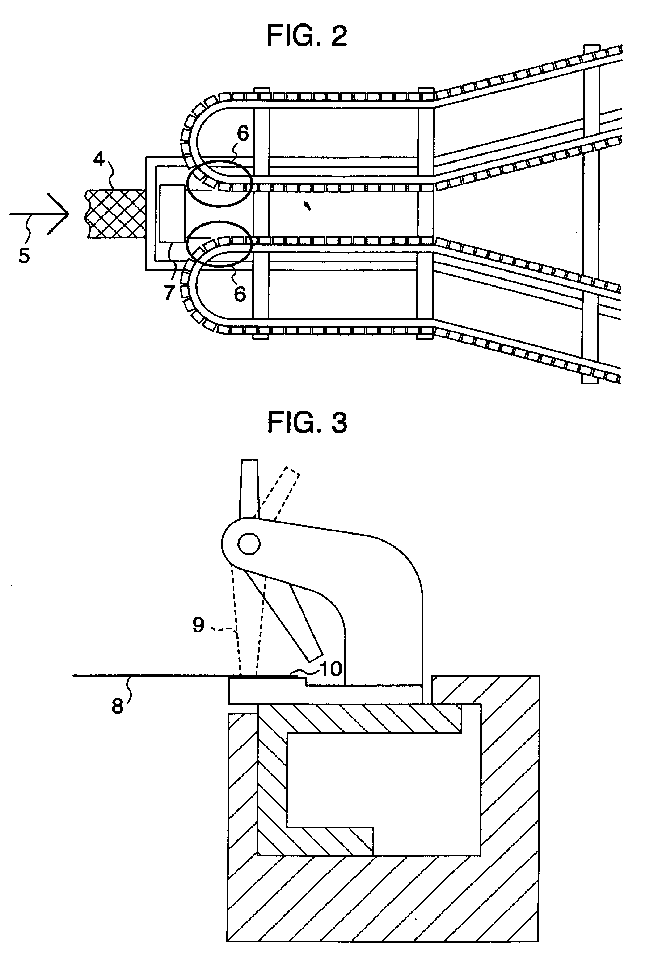

As shown in Fig.1, when stretching a film in the longitudinal direction in a longitudinal stretching step, a force acts to make the film shrink in the transverse direction. Although the centeral portion of the film is restrained, edge portions of the film contract freely. In other words, shrinkage in the transverse direction of a longitudinally stretched film differs in the central portion and the edge portions and consequently flatness is reduced. Such a film is flattened when tension is applied along a guide roll, but a thin film is curved in the width direction in a lower tension.
Specifically, as shown in Fig. 2, although tension acts on a film uniformly in the width direction along a guide roll 7 to maintain flatness before clips 6 of a transverse stretching machine, tension is not uniformly applied to the film in the width direction after passing through the guide roll 7 and immediately before being held by the clips 6, and consequently the film is curved and film edge portions are curled.

As shown in Fig. 3, the clip can hold the film when film edge portions are not curled, but when the film edge portions are much curled as shown in Fig. 4, the film edge is pushed out of the clip upon closing movement of the clip, resulting in the trouble of being unable to be held. Also, the movements in Fig. 5 through Fig. 8 cause the film edge to move slightly toward the outside of the clip, resulting in the shift of the holding position. As a result, although holding positions are at a constant distance from the film edge portion in a normal state as shown in the upper figure in Fig. 9, the distance varies when holding positions are shifted due to curl as in the middle figure in Fig. 9. The different stretching ratio in that portion causes the problem of varied film properties. In addition, when the film is not held by the clip, film rupture occurs from the portion that is not held as in the lower figure in Fig. 9.

For these problems, improvements of process conditions and apparatus have been considered. In terms of process conditions, the film tension in a longitudinal stretching process and a transverse stretching process may be increased, but in film forming of such plasticized polylactic acid film, the film is unintentionally stretched between machines, disturbing intended stretching. Also, possible improvements of apparatus include a method in which an auxiliary jig for guiding a film, such as a plate, is installed in the biting part of a clip so as to avoid curl of edge portions. However, when operated at a line speed of 50 m/minute as in production equipment, the trouble is that the film is caught on the plate. Alternatively, a technique of extruding while previously thickening edge portions of a film is proposed (see, for example, Patent Document 4). However, a special roll is necessary for extrusion and longitudinal stretching of a film whose thickness varies in the width direction, requiring enormous expense on equipment investment. Likewise, although a technique of using a different material for only edge portions is proposed, a complicated extrusion step must be established and usable raw materials are limited for recovering and reusing edge portions (see, for example, Patent Document 5).

As a transverse stretching machine, Edge Positioning Control (EPC) is employed in which the distance between clips at a film feeding area is automatically changed in accordance with the varied width of a longitudinally stretched film. However, EPC cannot make improvements for a film with a curled egde which is a problem in the present invention. A curled film has a narrowed width; and in EPC, the distance between clips is narrowed following the variation. However, when the upper moving part of a clip moves from the inside to the outside of the clip to hold a film, the curled portion interferes with the moving part, resulting in the problem that the film is pushed out of the clip. This means that EPC which is widely used for transverse stretching machines cannot solve the problem to be solved in the present invention.
As is described, so far the problem in producing a thin, highly flexible polylactic acid film containing a large amount of a plasticizer, which is unstretched and weak, efficiently at an industrial production level of a line speed of 50 m/minute or more, and a technique for solving the problem were not known.

Patent Document 1: JP-A-04-335060
Patent Document 2: JP-A-05-508819
Patent Document 3: JP-A-07-205278
Patent Document 4: JP-A-51-151771
Patent Document 5: JP-A-01-064822

### DISCLOSURE OF THE INVENTION

### PROBLEMS TO BE SOLVED BY THE INVENTION

An object of the present invention is to solve holding failure in a sequential biaxial stretching step of a thin film made of a polylactic acid resin to which a plasticizer is added in an amount as large as 10 to 50% by weight, which failure is caused by reduced flatness of the film occurring when the film having a thickness of 12 to 100 µm after completion of longitudinal stretching is continuously held by clips in a transverse stretching step.

### MEANS FOR SOLVING THE PROBLEMS

The present inventors have conducted intensive studies to solve the above problem and completed the present invention.
Accordingly, the present invention includes:
(1) a process for producing a polylactic acid film, comprising longitudinally stretching an unstretched film of a polylactic acid resin to which 10 to 50% by weight of a plasticizer is added using a longitudinal stretching machine under a condition that the film after longitudinal stretching has a thickness of 12 to 100 µm, and transversely stretching the film using a tenter type transverse stretching machine, thereby producing a sequentially biaxially stretched film, wherein a temperature of a clip built in the tenter type transverse stretching machine is adjusted to 70°C or lower when the film after longitudinal stretching passes through a guide roll, comes into contact with and is bitten by the clip;
(2) the process according to the above (1), wherein an ambient temperature around the film after longitudinal stretching is 30°C or lower when the film passes through a guide roll, comes into contact with and is bitten by a clip built in the tenter type transverse stretching machine, and a tension on the film between the longitudinal stretching machine and the transverse stretching machine is adjusted to 10 to 800 N/m in width; and
(3) the process according to the above (1) or (2), wherein the clip holding the film has a centerline average roughness of 0.2 to 30 µm on the metal surface which comes into contact with the film, a contact area per 1 mm in a flow direction of 0.2 to 5.0 mm² and a holding pressure of 0.1 to 7.0 MPa.

### ADVANTAGES OF THE INVENTION

The present invention makes it possible to produce an intended flexible and thin polylactic acid film to which a large amount of a plasticizer is added efficiently at an industrial production level with preventing holding failure of the film occurring in a transverse stretching step.

### BEST MODE FOR CARRYING OUT THE INVENTION

The present invention inculdes a polylactic acid resin to which 10 to 50% by weight of a plasticizer is added, and an unstretched film prepared by extrusion molding or the like is used.
The polylactic acid resin according to the present invention contains 85% by weight or more of a lactic acid unit. Polylactic acid is prepared by dehydration condensation of L-lactic acid, D-lactic acid or a mixture thereof. Preferably polylactic acid is prepared by ring opening polymerization of lactide which is a cyclic dimer of lactic acid. Lactides include L-lactide which is a cyclic dimer of L-lactic acid, D-lactide which is a cyclic dimer of D-lactic acid and meso-lactide prepared from cyclic dimerization of D-lactic acid and L-lactic acid. At least one of them is used. Ring-opening polymerization of lactide is preferred because polymerization of lactide is easy and products of a high polymerization degree are easily prepared.

Also, a polymer of aliphatic hydroxycarboxylic acid, and/or aliphatic diol and aliphatic polycarboxylic acid, or lactone may be added to or copolymerized with polylactic acid.
As aliphatic hydroxycarboxylic acid, for example, at least one member selected from glycolic acid, α(or 2)-hydroxyisobutyric acid, β(or 3)-hydroxybutyric acid, β(or 3)-hydroxyvaleric acid, 3-hydroxyhexanoic acid and 4-hydroxybutanoic acid is preferably used as a raw material. Also, a cyclic dimer thereof including existing optical isomers thereof, or an ester thereof may be used as a raw material. Examples of lactones to be copolymerized include β-butyrolactone, β-propiolactone, pivalolactone, γ-butyrolactone, δ-valerolactone, β-methyl δ-valerolactone and ε-caprolactone.

As aliphatic polycarboxylic acid, malonic acid, succinic acid, glutaric acid, adipic acid, pimelic acid, azelaic acid, sebacic acid, 2,2-dimethylglutaric acid, suberic acid, 1,3-cyclopentanedicarboxylic acid, 1,4-dicyclohexanedicarboxylic acid, 1,3-cyclohexanedicarboxylic acid, diglycolic acid, ester derivatives thereof and acid anhydrides thereof may be used. Also, a plurality of these components may be used in combination.
Examples of aliphatic polyhydric alcohols include ethylene glycol, diethylene glycol, other polyethylene glycols, propylene glycol, 1,3-propanediol, 2,2-dimethyl-1,3-propanediol, 1,3-butanediol, 1,4-butanediol, 1,5-pentanediol, 1,6-hexanediol, 2,2-trimethyl-1,6-hexanediol, 1,3-cyclohexanedimethanol, 1,4-cyclohexanedimethanol, 2,2,4,4-tetramethyl-1,3-cyclobutanediol, triethylene glycol, tetraethylene glycol, di-, tri- or tetrapropylene glycol and diols having a carbonate bond. Ethylene oxide, propylene oxide and the like may also be used. A plurality of these components may be used in combination.

In the present invention, 10 to 50% by weight, preferably 10 to 40% by weight of a plasticizer is added to give good flexibility. More preferably, 15 to 30% by weight of a plasticizer is added. The plasticizer in the present invention has a plasticizing effect when added to a polylactic acid resin. Although the plasticizer is not particularly limited as long as it has a plasticizing effect, ester structures are preferred.
Such ester structures mean esters of at least one alcohol selected from aliphatic alcohols, alicyclic alcohols, polyhydric alcohols thereof and polycondensation products thereof and at least one carboxylic acid selected from aliphatic carboxylic acids, aromatic carboxylic acids and polycarboxylic acids thereof. Esters of aliphatic hydroxycarboxylic acid and the above alcohol and carboxylic acid are also included. These esters may also be denatured.

Examples of aliphatic alcohols include methyl alcohol, ethyl alcohol and octyl alcohol. Examples of polyhydric alcohols include glycerol, ethylene glycol and propylene glycol. Examples of polycondensation products thereof include polyglycerol, polyethylene glycol and polypropylene glycol.
Examples of aliphatic carboxylic acids include alkyl carboxylic acids such as formic acid and acetic acid, saturated fatty acids such as caproic acid, caprylic acid, capric acid, lauric acid, myristic acid, palmitic acid and stearic acid and unsaturated fatty acids such as oleic acid, erucic acid, linoleic acid and linolenic acid. Examples of aliphatic polycarboxylic acids include malonic acid, succinic acid, glutaric acid, adipic acid, sebacic acid. Examples of aromatic polycarboxylic acids include phthalic acid and trimellitic acid. Examples of aliphatic hydroxycarboxylic acids include citric acid, malic acid and tartaric acid. An auxiliary agent may be added to the mixture of a polylactic acid resin and a plasticizer. The auxiliary agent means a stabilizer, an antioxidant, an ultraviolet absorber, a colorant and the like.

In the present invention, an unstretched film of a mixture composed of the above-described polylactic acid and a plasticizer is used. Although the unstretched film may be prepared by any method, the film is generally prepared by extrusion molding. Pellets of a mixture of a polylactic acid resin and a plasticizer are previously prepared by a biaxial extruder or a mixer. The pellets are introduced into an extruder for molding and molten pellets are extruded through a T die on the tip of the extruder. Alternatively, using a biaxial extruder as an extruder for molding, a lactic acid resin is introduced into the feeding zone of the extruder and a plasticizer is pressed in the middle of the barrel so as to carry out kneading and extrusion molding at the same time.

Preferably the molten extrudate is rapidly cooled by contacting with a cast roll controlled to a temperature of 50°C or lower, thereby preparing an amorphous unstretched film. This is because rapid cooling inhibits growth of crystal in the extrudate and makes it easier to prevent stretching failure caused by crystal. Generally the unstretched film has a thickness of preferably 40 to 800 µm.
An unstretched film prepared by extrusion molding is longitudinally stretched at 30 to 90°C, preferably 30 to 80°C using a group of rolls of varying peripheral speeds. Increasing longitudinal stretching ratios in a range in which transverse stretching is possible can improve properties of a film. The longitudinal stretching ratio is preferably twice or more to 5 times or less. However, as described above, high longitudinal stretching ratios cause different shrinkage behavior in the width direction, causing holding failure in transverse stretching, resulting in the decrease of productivity. Accordingly, to satisfy both improvement of film properties by a high stretching ratio and improvement of productivity, it is necessary to reduce holding failure.

The above longitudinally stretched film is continuously transversely stretched at 40 to 110°C, more preferably 40 to 100°C. A tenter type stretching machine is used for the transverse stretching. The transverse stretching ratio is preferably 2 times or more and 10 times or less. Increasing stretching ratios can improve film properties also in the transverse stretching step, but the increased stretching ratios cause increase in stretching stress per unit cross sectional area. When the stretching stress is high and holding by clips is somewhat deficient, film is broken at the defective portion when stretched. To satisfy both improvement of film properties by a high stretching ratio and improvement of productivity also in the transverse stretching step, it is necessary to reduce holding failure.

In the present invention, the temperature of a clip built in a tenter type transverse stretching machine when the film after longitudinal stretching passes through a guide roll, comes into contact with and is bitten by the clip (hereinafter sometimes simply referred to as "temperature of clip") must be controlled to 70°C or lower, preferably 20°C or higher to 70°C or lower.
A temperature of a clip of 70°C or lower avoids film edge portions from being heated when the film after longitudinal stretching and clips come into contact, suppressing the above-described stress which causes curl of film edge portions due to the difference in shrinkage in the central portion and the edge portions of the film after longitudinal stretching, consequently maintaining the flatness of the film.

On the other hand, when the temperature of a clip when the film after longitudinal stretching comes into contact with and is bitten by the clip is higher than 70°C, film edge portions are heated and curled when the film and the clip come into contact, reducing the flatness of the film. The temperature of the clip is preferably 20°C or higher. This is because dew condensation on the clips, rollers and sliding parts supporting the clips hardly occurs, making it easier to prevent generation of rust.
The temperature of the clip is more preferably 25°C or higher to 50°C or lower.

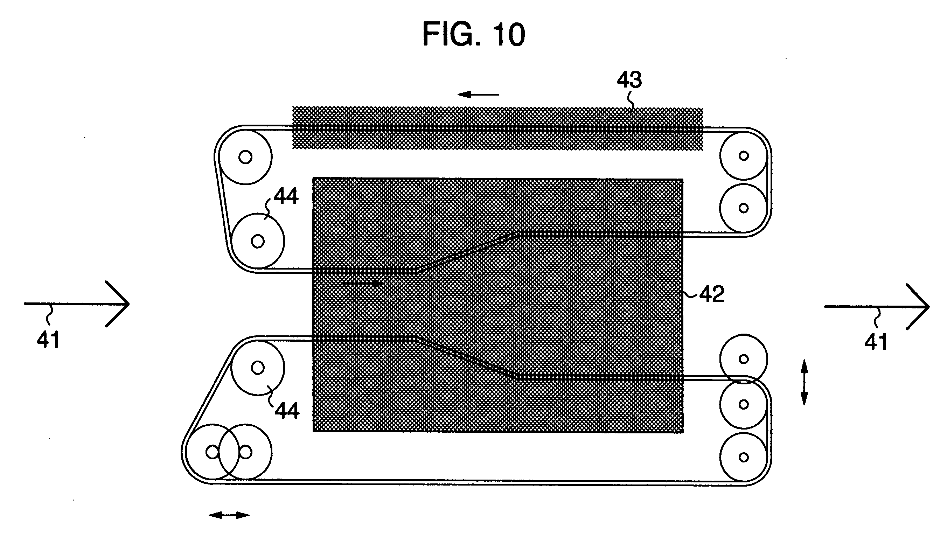

The temperature of the clip in the present invention can be controlled by, for example, the method described below. Systems of tenter type stretching machines include those in which a so-called return side in an endless chain with clips running on front and back wheels, where no film is held and which moves in the direction opposite to the flow direction, is housed in a tenter oven, and those in which the return side is not housed. The former is called an outer return system and the latter an inner return system. As Fig. 10 shows, a return rail is open to the atmosphere in the outer return system. In that system, clips on the return rail are cooled by passing through a bath in which cold air is circulated. Also, the length of the bath and the temperature of cold air are determined so as to cool the clips to an intended temperature.

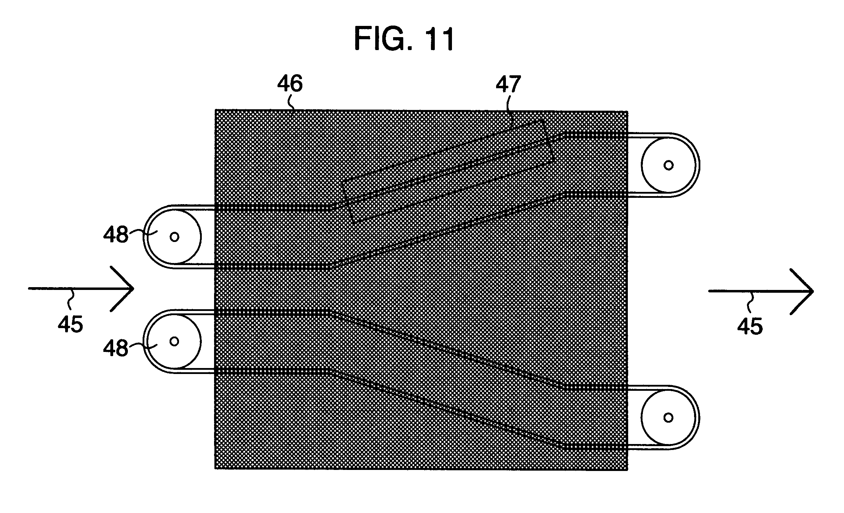

On the other hand, Edge Positioning Control (EPC) is often used in production facilities, in which the distance between clips at a film introduction area in a transverse stretching machine is automatically changed based on the varied width of a longitudinal stretched film. The EPC is a system which detects film edges and moves wheels at the entrance of a tenter in the width direction in response to the variation in the edges.
As shown in Fig. 11 shows, wheels are housed in a tenter oven in order to keep enough space for movement in the width direction and a return rail is also housed in the oven. The inner return system is often used in production facilities. When cooling clips in the inner return system, an insulating chamber for isolating the return rail part is provided in the tenter oven. Cold air is supplied to the chamber from outside to take the heat from clips on the return rail. Since the cold air supplied to the insulating chamber may inhibit evenness of the stretching temperature or the heat setting temperature when discharged into the tenter oven, preferably the cold air is discharged outside. The volume ratio of the cold air to be discharged is preferably 0.9 or more relative to the cold air supplied thereto. This is because unevenness of temperature in the stretching chamber and the heat setting chamber due to cold air in the insulating chamber can be easily prevented. The volume ratio of the cold air to be discharged is preferably 1.1 or less relative to the cold air supplied thereto. This is because hot air in the tenter oven is difficult to flow into the insulating chamber and thus rapid cooling of clips is easily accomplished.

Also, as shown in Fig. 2, the ambient temperature around the film after longitudinal stretching when the film passes through a guide roll 7, comes into contact with and is bitten by a clip 6 built in a tenter type transverse stretching machine (hereinafter sometimes simply referred to as "ambient temperature upon holding") is preferably controlled to 30°C or lower by shielding. This is because the problem of elongation of film is less likely to occur with a minimum tension between the longitudinal stretching machine and the transverse stretching machine considering stress loss caused by machines. The ambient temperature is more preferably 18°C or lower.
Although the lower limit of the ambient temperature upon holding when shielded is not particularly defined, preferably the difference from the temperature in the room where the film forming machine is placed (hereinafter sometimes simply referred to as "room temperature") is 30°C or smaller. This is because dew condensation due to shielding the air around the holding part from the outside air is difficult to occur.

Preferably the tension on the film between the longitudinal stretching machine and the transverse stretching machine (hereinafter sometimes simply referred to as "longitudinal-transverse tension") is adjusted to 350 N or less per 1 m of the film width. This is because wrinkles in a transition part which is formed when a flexible film is tentered by the tension in the film flow direction using a roll or the like and tentered by the tension in the film width direction using clips, are less likely to be formed, and which makes, it easier to hold a film by clips. The longitudinal-transverse tension is preferably 30 N or more per 1 m of the film width. This is because, in a normal machine, it is easier to avoid difficulty in tension control due to noise from stress loss caused by tension measuring machines or motors, which is reflected in measured values of the tension in each stretching machine. For more stable tension control, preferably the tension per 1 m of the film width is 40 N or more.

Clips are heated to the stretching/heat setting temperature in the oven with the film held thereby. Then clips release the film at the tenter exit and come back to the entrance along the return rail. Clips repeat open/close movement during operation, and heating and cooling in addition to the movement results in dimensional change of the whole clips. For this reason, heat retaining treatment is generally done so that the temperature of clips does not change in order to prevent such dimensional change of whole clips.
Despite the treatment, however, repeated heating and cooling of clips eventually leads to dimensional change of clips as mentioned in the present application. Such dimensional change of clips causes shift of clip holding parts, which results in the problem of slipping of a film from clips in response to stretching stress. Given this, techniques to avoid slipping of a film from clips by increasing the contact pressure of clips to film or by forming a sharp wedged part at the tip of clips are used.

However, with the above techniques, a thin, 12 to 100 µm thick film having flexible properties which is prepared by adding 10 to 50% by weight of plasticizer to a polylactic acid resin is deformed due to high stress at the holding part, resulting in problems such as tearing. In addition, while a film held by clips is supposed to be released from the clips at the exit of a transverse stretching machine at a low stress, a film held by clips at a high stress or by a sharp wedged part requires high stress when released, and such a high stress results in tearing of the film.

Given this, intensive studies were carried out on a clip which is capable of holding a flexible, thin film prepared by adding 10 to 50% by weight of plasticizer to a polylactic acid resin. As a result, it has been found that holding failure is improved when clips have a centerline average roughness Ra of 0.2 to 30 µm on its metal surface coming into contact with a film, a pressure when holding a film of 0.1 to 7.0 MPa and a contact area with a film of 0.2 to 5.0 mm² per 1 mm of the film in the flow direction.

Preferably, clips have moderate irregularity in terms of centerline average roughness. The metal surface roughness defines irregularity of the film. Specifically, clips have an Ra in the range of preferably 0.2 to 30 µm. This is because a surface roughness of the metal part of clips of 30 µm or less prevents the wedged part on the surface from biting into the flexible film surface, making faulty release of clips from a film less likely to occur. More preferably clips have an Ra of 12.5 µm or less. Also, a surface roughness of clips of 0.2 µm or more enables successful release of clips from a film at the tenter exit. More preferably clips have an Ra of 0.8 µm or more.

The stress when a film is held is preferably 7.0 MPa or less. This is because the phenomenon of deformation of a film by the pressure on the clip contact surface and break of a thinned portion due to stretching stress is less likely to occur. More preferably the stress when a film is held is 3.0 MPa or less. The stress when a film is held is preferably 0.1 MPa or more. This is because the phenomenon of slipping of a film from clips by stretching stress due to an insufficient holding force at the contact surface is less likely to occur. More preferably the stress when a film is held is 0.2 MPa or more.
Clips have a contact area of preferably 5.0 mm² per 1 mm in the flow direction. This is because faulty release of a film from clips at the exit of a transverse stretching machine is less likely to occur. More preferably clips have a contact area of 2 mm² or less. Also, clips have a contact area of preferably 0.2 mm² or more per 1 mm in the flow direction. This is because the holding ability of clips is satisfactory. More preferably clips have a contact area of 0.4 mm² or more.

### Examples

Hereinafter the present invention is described in detail by means of Examples and Comparative Examples.

### (Method of evaluating clip holding properties)

A longitudinally stretched film is held by clips in a transverse stretching machine under conditions described in Examples and Comparative Examples. Continuous film forming of 100,000 m is carried out under the same operation conditions and the level of holding during the operation is evaluated according to the following classification.
⊚(excellent) : No curl in edge portion of longitudinally stretched film; consequently holding position at film edge portion not shifted over 5 mm in the width direction.
○(good) : Curl in edge portion of longitudinally stretched film occurred; holding position at film edge portion shifted over 5 mm in the width direction; however, the trouble of being unable to hold film due to large shift of film from clips not found.
×(bad) : Curl in edge portion of longitudinally stretched film occurred; the trouble of being unable to hold film due to large shift of film from clips occurred once or more.

### (Evaluation of stability in tenter transverse stretching step)

A longitudinally stretched film was held by clips in a transverse stretching machine under conditions described in Examples and Comparative Examples. Continuous film forming of 100,000 m was carried out under the same operation conditions. The problems of dew condensation on clips, longitudinal-transverse tension control, faulty release of clips, rupture, and slip of clips during the operation were investigated in relevant Examples and Comparative Examples.

### (Measurement of temperature of running clip)

Temperatures of running clips were measured using a radiation thermometer. Since radiation rates vary depending on the color or the material of the surface of a clip, radiation rates were calibrated so that the temperature is the same as that measured by a contact method when clips were not in motion. When temperatures could be measured due to the color or the material of the surface of clips, they were measured after applying blackbody spray or blackbody tape attached to the radiation thermometer to some clips.

### (Measurement of surface roughness of clip)

The surface roughness of a clip in the width direction where transverse stretching stress is generated was measured. The surface roughness was measured using a contact probe having a tip R of 2 µm in accordance with JIS B0601 and JIS B0651. Both surfaces of the lower fixed part and the upper moving part were measured. The centerline average roughness (Ra) was calculated from the measurement results.

### (Measurement of holding pressure and contact area of clip)

A required number of Prescales available from FUJIFILM Corporation were prepared and held by clips to be measured without slapping movement. The width of a portion where color developed by pressure was measured and the contact area of one side of a clip was calculated per 1 mm in the flow direction. Also holding pressure was calculated by digitalizing color development levels by a standard chart.

### Example 1

Poly-L-lactic acid in which the ratio of a structural unit composed of L-lactic acid and a structural unit composed of D-lactic acid was about 96:4 (described as PLA:D4 in Tables) and which had a weight average molecular weight of about 190000 was extruded through a biaxial extruder. As a plasticizer, Glycerol diacetomonolaurate (DALG) was added thereto at the middle of the barrel. The mixture had a composition ratio of 80% by weight of polylactic acid and 20% by weight of glycerol diacetomonolaurate. The molten material was extruded at 180°C through a T die at the tip of the extruder and an unstretched film having a width of 400 mm and a thickness of 100 µm was prepared by rapid cooling by contacting with a casting roll rotating at a peripheral speed of 15 m/minute. The unstretched film was longitudinally stretched by continuously passing through a roll heated to 45°C whose peripheral speed was 4 times greater. As a result, a longitudinally stretched film having a width of 260 mm and a thickness of 40 µm was prepared. The film was further stretched continuously by a tenter type transverse stretching machine at a speed of 60 m/minute at a ratio of 4 times to give a film of 10 µm. The hot air temperature in the stretching zone was 80°C and the hot air temperature in the heat setting zone was 130°C. The tenter used was of an inner return system and cold air at 15°C was supplied to the return rail chamber in an oven at both sides each at 20 m³/min, and simultaneously the cold air was discharged from the return rail chamber at 20 m³/min at both sides. Consequently the temperature of clips when holding the film was 35°C. The tension between the longitudinal stretching machine and the transverse stretching machine was set to 25 N. The tension is 96 N/m in terms of width. The ambient temperature around the holding part of clips at the tenter entrance was adjusted to 15°C. Also the temperature of the room where the film forming machine was placed was 28°C. Clips, whose part coming into contact with a film had a centerline average roughness of 1.5 µm at the lower fixed part and 1.7 µm at the upper moving part, and which had a contact area of 1.0 mm² per 1 mm in the flow direction at one side and a holding pressure of 0.4 MPa, were used.
Continuous film forming of 100,000 m was carried out under the above condition and as a result, the problem of the shift of the holding position over 5 mm was not found. No other problems were found.

### Example 2

Continuous film forming of 100,000 m was carried out in the same manner as Example 1 except for using 15% by weight of acetyl tributyl citrate (ATBC) as a plasticizer relative to 85% by weight of polylactic acid. As a result, the problem of the shift of the holding position of clips over 5 mm was not found. No other problems were found.

### Example 3

Continuous film forming of 100,000 m was carried out under the same condition as Example 1 except for using 25% by weight of glycerol monocaprylate acetate (DACG) as a plasticizer relative to 75% by weight of polylactic acid. As a result, the problem of the shift of the holding position of clips over 5 mm was not found. No other problems were found.

### Example 4

Continuous film forming of 100,000 m was carried out in the same manner as Example 1 except for using 40% by weight of glycerol triacetate (TAG) as a plasticizer relative to 60% by weight of polylactic acid. As a result, the problem of the shift of the holding position of clips over 5 mm was not found. No other problems were found.

### Example 5

Continuous film forming of 100,000 m was carried out under the same condition as Example 1 except that the temperature of the cold air supplied to the return rail chamber was 18°C and the temperature of clips when holding the film was 45°C. As a result, the problem of the shift of the holding position of clips over 5 mm was not found. No other problems were found.

### Example 6

Continuous film forming of 100,000 m was carried out under the same condition as Example 1 except that the tension between the longitudinal stretching machine and the transverse stretching machine was set to 100 N. As a result, shift of the holding position of clips over 5 mm was found, but the shift did not lead to the problem of drop of film from clips or the problem of break of film upon stretching at a part suffering from holding failure. No other problems were found.

### Example 7

Continuous film forming of 100,000 m was carried out under the same condition as Example 1 except that the tension between the longitudinal stretching machine and the transverse stretching machine was set to 5 N. As a result, the problem of the shift of the holding position of clips over 5 mm was not found. The control of the tension between the longitudinal stretching machine and the transverse stretching machine was unstable, which results in hunting at a fluctuation of 30%.

### Example 8

Continuous film forming of 100,000 m was carried out under the same condition as Example 1 except that the temperature of the cold air supplied to the return rail chamber was 30°C and the temperature of clips when holding the film was 65°C. As a result, the problem of the shift of the holding position of clips over 5 mm was not found. No other problems were found.

### Example 9

Continuous film forming of 100,000 m was carried out under the same condition as Example 1 except that the ambient temperature around the holding part of clips at the tenter entrance was 25°C. As a result, shift of the holding position of clips over 5 mm was found, but the shift did not lead to the problem of drop of film from clips or the problem of break of film upon stretching at a part suffering from holding failure. No other problems were found.

### Example 10

Continuous film forming of 100,000 m was carried out under the same condition as Example 1 except that the ambient temperature in the room where the film forming machine was placed was 35°C and the ambient temperature around the holding part of clips at the tenter entrance was 0°C. Although no shift of the holding position was found, which means no holding failure occurred, the large difference between the temperature in the film forming room and the ambient temperature around the holding part led to dew condensation at the insulation part.

### Example 11

Continuous film forming of 100,000 m was carried out under the same condition as Example 1 except that the centerline average roughness of parts of clips coming into contact with the film was set to 20 µm at the lower fixed part and 25 µm at the upper moving part. As a result, the problem of the shift of the holding position of clips over 5 mm was not found. However, when releasing clips from the film at the exit of the transverse stretching machine, rupture of the film occurred in some part due to faulty release.

### Example 12

Continuous film forming of 100,000 m was carried out under the same condition as Example 1 except that the centerline average roughness of parts of clips coming into contact with the film was set to 0.5 µm at the lower fixed part and 0.4 µm at the upper moving part. As a result, the problem of the shift of the holding position of clips over 5 mm was not found. However, when releasing clips from the film at the exit of the transverse stretching machine, rupture of the film occurred in some parts due to faulty release.

### Example 13

Continuous film forming of 100,000 m was carried out under the same condition as Example 1 except that the shape of parts of clips coming into contact with the film was changed so that the contact area with the film per 1 mm in the flow direction at one side was 0.3 mm² and the holding pressure was 2.0 MPa. As a result, the problem of the shift of the holding position of clips over 5 mm was not found. However, the problem of drop of film from clips due to stretching stress was once observed during transverse stretching.

### Example 14

Continuous film forming of 100,000 m was carried out under the same condition as Example 1 except that the shape of parts of clips coming into contact with a film was changed so that the contact area with the film per 1 mm in the flow direction at one side was 3.0 mm² and the holding pressure was 0.3 MPa. As a result, the problem of the shift of the holding position of clips over 5 mm was not found. However, when releasing clips from the film at the exit of the transverse stretching machine, rupture of the film occurred in some part due to faulty release.

### Example 15

Continuous film forming of 100,000 m was carried out under the same condition as Example 1 except that the shape of parts of clips coming into contact with a film was changed so that the contact area with the film per 1 mm in the flow direction at one side was 1.5 mm² and the holding pressure was 0.1 MPa. As a result, the problem of the shift of the holding position of clips over 5 mm was not found. However, the problem of drop of film from clips due to stretching stress was once observed during transverse stretching.

### Example 16

Continuous film forming of 100,000 m was carried out under the same condition as Example 1 except that the shape of parts of clips coming into contact with a film was changed so that the contact area with the film per 1 mm in the flow direction at one side was 0.5 mm² and the holding pressure was 4.0 MPa. As a result, the problem of the shift of the holding position of clips over 5 mm was not found. However, the part of the film held by clips became thin by the pressure of clips and rupture of the film once occurred from the thinned part.

### Example 17

A mixture of poly-L-lactic acid in which the ratio of a structural unit composed of L-lactic acid and a structural unit composed of D-lactic acid was about 96:4 and which had a weight average molecular weight of about 190,000 and GSPla(registered trademark)AZ91T available from Mitsubishi Chemical Corporation which is polybutylene succinate (described as PBS below and in Tables) composed of a polymer of 1,4-butanediol and succinic acid was extruded through a biaxial extruder. DALG which was a plasticizer was added thereto at the middle of the barrel. The mixture had a composition ratio of 72% by weight of polylactic acid, 8% by weight of PBS and 20% by weight of DALG. Continuous film forming of 100,000 m was carried out in the same manner as Example 1 except the above. As a result, the problem of the shift of the holding position of clips over 5 mm was not found. No other problems were found.

### Example 18

A mixture of poly-L-lactic acid in which the ratio of a structural unit composed of L-lactic acid and a structural unit composed of D-lactic acid was about 96:4 and which had a weight average molecular weight of about 190,000 and GSPla(registered trademark)AD92W available from Mitsubishi Chemical Corporation which is polybutylene succinate adipate (described as PBSA below and in Tables) composed of a polymer of 1,4-butanediol, succinic acid and adipic acid was extruded through a biaxial extruder. DALG which was a plasticizer was added thereto at the middle of the barrel. The mixture had a composition ratio of 72% by weight of polylactic acid, 8% by weight of PBSA and 20% by weight of DALG. Continuous film forming of 100,000 m was carried out in the same manner as Example 1 except the above. As a result, the problem of the shift of the holding position of clips over 5 mm was not found. No other problems were found.

### Example 19

A mixture of poly-L-lactic acid in which the ratio of a structural unit composed of L-lactic acid and a structural unit composed of D-lactic acid was about 96:4 and which had a weight average molecular weight of about 190,000 and Ecoflex(registered trademark)FBX7011 available from BASF which is polybutylene adipate-butylene terephthalate (described as PBAT below and in Tables) composed of a random copolymer of 1,4-butanediol, adipic acid and terephthalic acid was extruded through a biaxial extruder. DALG which was a plasticizer was added thereto at the middle of the barrel. The mixture had a composition ratio of 72% by weight of polylactic acid, 8% by weight of PBAT and 20% by weight of DALG. Continuous film forming of 100,000 m was carried out in the same manner as Example 1 except the above. As a result, the problem of the shift of the holding position of clips over 5 mm was not found. In addition, no other problems were found.

### Example 20

A mixture of poly-L-lactic acid in which the ratio of a structural unit composed of L-lactic acid and a structural unit composed of D-lactic acid was about 96:4 and which had a weight average molecular weight of about 190,000 and a block copolymer composed of 50% by weight of a polylactic acid unit and 50% by weight of a polymer of propylene glycol and sebacic acid (described as PLAPS below and in Tables) was extruded through a biaxial extruder. DALG which was a plasticizer was added thereto at the middle of the barrel. The mixture had a composition ratio of 72% by weight of polylactic acid, 8% by weight of PLAPS and 20% by weight of DALG. Continuous film forming of 100,000 m was carried out in the same manner as Example 1 except the above. As a result, the problem of the shift of the holding position of clips over 5 mm was not found. No other problems were found.

### Comparative Example 1

Continuous film forming of 100,000 m was carried out under the same condition as Example 1 except that the air in the film forming room was directly supplied to the return rail chamber and the temperature of clips when holding the film was 80°C. As a result, the holding position shifted 10 mm from the intended position in the step of holding by clips and the trouble of drop of film from clips occurred during stretching.

### Comparative Example 2

Continuous film forming of 100,000 m was carried out under the same condition as Example 1 except that the temperature of clips when holding the film was set to 20°C by supplying cold air at 3°C to the return rail chamber in the oven at both sides each at 30 m³/min and simultaneously discharging the cold air from the return rail chamber at 30 m³/min at both sides. As a result, the problem of the shift of the holding position of clips over 5 mm was not found, but dew condensation on clips occurred and rust was found on the condensed part, causing serious damage to the machines. Production conditions and evaluation results of Examples 1 to 20 and Comparative Examples 1 and 2 are shown in Tables 1 to 4.

**[Table 1]**

| items | unit | Example 1 | Example 2 | Example 3 | Example 4 | Example 5 | Example 6 | Example 7 | Example 8 |
|---|---|---|---|---|---|---|---|---|---|
| polylactic acid resin | | PLA : D4 | PLA : D4 | PLA : D4 | PLA : D4 | PLA : D4 | PLA : D4 | PLA : D4 | PLA : D4 |
| plasticizer | | DALG | ATBC | DACG | TAG | DALG | DALG | DALG | DALG |
| ratio of resin | % by weight | 80 | 85 | 75 | 60 | 80 | 80 | 80 | 80 |
| ratio of plasticizer | % by weight | 20 | 15 | 25 | 40 | 20 | 20 | 20 | 20 |
| line speed | m/minute | 60 | 60 | 60 | 60 | 60 | 60 | 60 | 60 |
| temperature of clip | °C | 35 | 35 | 35 | 35 | 45 | 35 | 35 | 65 |
| longitudinal-transverse tension | N | 25 | 25 | 25 | 25 | 25 | 100 | 5 | 25 |
| film width | mm in width | 260 | 260 | 260 | 260 | 260 | 260 | 260 | 260 |
| tension | N/m in width | 96 | 96 | 96 | 96 | 96 | 385 | 20 | 96 |
| ambient temperature upon holding | °C | 15 | 15 | 15 | 15 | 15 | 15 | 15 | 15 |
| site temperature | °C | 28 | 28 | 28 | 28 | 28 | 28 | 28 | 28 |
| site-ambient atmosphere upon holding | °C | 13 | 13 | 13 | 13 | 13 | 13 | 13 | 13 |
| surface roughness (fixed part) | µm | 1.5 | 1.5 | 1.5 | 1.5 | 1.5 | 1.5 | 1.5 | 1.5 |
| surface roughness (moving part) | µm | 1.7 | 1.7 | 1.7 | 1.7 | 1.7 | 1.7 | 1.7 | 1.7 |
| contact area | mm²/mm in width | 1.0 | 1.0 | 1.0 | 1.0 | 1.0 | 1.0 | 1.0 | 1.0 |
| holding pressure | MPa | 0.4 | 0.4 | 0.4 | 0.4 | 0.4 | 0.4 | 0.4 | 0.4 |
| temperature upon longitudinal stretching | °C | 45 | 45 | 45 | 45 | 45 | 45 | 45 | 45 |
| longitudinal stretching ratio | times | 4 | 4 | 4 | 4 | 4 | 4 | 4 | 4 |
| temperatuer upon transverse stretching | °C | 80 | 80 | 80 | 80 | 80 | 80 | 80 | 80 |
| transverse stretching ratio | times | 4 | 4 | 4 | 4 | 4 | 4 | 4 | 4 |
| heat setting temperature | °C | 130 | 130 | 130 | 130 | 130 | 130 | 130 | 130 |
| temperature of cold air against clip | °C | 15 | 15 | 15 | 15 | 18 | 15 | 15 | 30 |
| amount of cold air against clip | m³/minute | 20 (one side) | 20 (one side) | 20 (one side) | 20 (one side) | 20 (one side) | 20 (one side) | 20 (one side) | 20 (one side) |
| holding properties | ⊚ ○ × | ⊚ | ⊚ | ⊚ | ⊚ | ⊚ | ○ | ⊚ | ⊚ |
| dew condensation on clip | | | | | | | | | |
| control of longitudinal-transverse tention | | | | | | | | faulty control | |
| faulty release of clip | | | | | | | | | |
| ruptuer | | | | | | | | | |
| slip of clip | | | | | | | | | |

**[Table 2]**

| items | unit | Example 9 | Example 10 | Example 11 | Example 12 | Example 13 | Example 14 | Example 15 | Example 16 |
|---|---|---|---|---|---|---|---|---|---|
| polylactic acid resin | | PLA : D4 | PLA : D4 | PLA : D4 | PLA : D4 | PLA : D4 | PLA : D4 | PLA : D4 | PLA : D4 |
| plasticizer | | DALG | DALG | DALG | DALG | DALG | DALG | DALG | DALG |
| ratio of resin | % by weight | 80 | 80 | 80 | 80 | 80 | 80 | 80 | 80 |
| ratio of plasticizer | % by weight | 20 | 20 | 20 | 20 | 20 | 20 | 20 | 20 |
| line speed | m/minute | 60 | 60 | 60 | 60 | 60 | 60 | 60 | 60 |
| temperature of clip | °C | 35 | 35 | 35 | 35 | 35 | 35 | 35 | 35 |
| longitudinal-transverse tension | N | 25 | 25 | 25 | 25 | 25 | 25 | 25 | 25 |
| film width | mm in width | 260 | 260 | 260 | 260 | 260 | 260 | 260 | 260 |
| tension | N/m in width | 96 | 96 | 96 | 96 | 96 | 96 | 96 | 96 |
| ambient temperature upon holding | °C | 25 | 0 | 15 | 15 | 15 | 15 | 15 | 15 |
| site temperature | °C | 28 | 35 | 28 | 28 | 28 | 28 | 28 | 28 |
| site-ambient atmosphere upon holding | °C | 3 | 35 | 13 | 13 | 13 | 13 | 13 | 13 |
| surface roughness (fixed part) | µm | 1.5 | 1.5 | 20 | 0.5 | 1.5 | 1.5 | 1.5 | 1.5 |
| surface roughness (moving part) | µm | 1.7 | 1.7 | 25 | 0.4 | 1.7 | 1.7 | 1.7 | 1.7 |
| contact area | mm²/m in width | 1.0 | 1.0 | 1.0 | 1.0 | 0.3 | 3.0 | 1.5 | 0.5 |
| holding pressure | MPa | 0.4 | 0.4 | 0.4 | 0.4 | 2 | 0.3 | 0.1 | 4 |
| temperature upon longitudinal stretching | °C | 45 | 45 | 45 | 45 | 45 | 45 | 45 | 45 |
| longitudinal stretching ratio | times | 4 | 4 | 4 | 4 | 4 | 4 | 4 | 4 |
| temperatuer upon transverse stretching | °C | 80 | 80 | 80 | 80 | 80 | 80 | 80 | 80 |
| transverse stretching ratio | times | 4 | 4 | 4 | 4 | 4 | 4 | 4 | 4 |
| heat setting temperature | °C | 130 | 130 | 130 | 130 | 130 | 130 | 130 | 130 |
| temperature of cold air against clip | °C | 12 | 12 | 12 | 12 | 12 | 12 | 12 | 12 |
| amount of cold air against clip | N/minute | 20 (one side) | 20 (one side) | 20 (one side) | 20 (one side) | 20 (one side) | 20 (one side) | 20 (one side) | 20 (one side) |
| holding properties | ⊚ ○ × | ○ | ⊚ | ⊚ | ⊚ | ⊚ | ⊚ | ⊚ | ⊚ |
| dew condensation on clip | | | | | | | | | |
| control of longitudinal-transverse tention | | | | | | | | | |
| faulty release of clip | | | | faulty release | faulty release | | faulty release | | |
| ruptuer | | | | | | | | | rupture |
| slip of clip | | | | | | slip of clip | | slip of clip | |

**[Table 3]**

| items | unit | Comparative Example 1 | Comparative Example 2 |
|---|---|---|---|
| polylactic acid resin | | PLA : D4 | PLA : D4 |
| plasticizer | | DALG | DALG |
| ratio of resin | % by weight | 80 | 80 |
| ratio of plasticizer | % by weight | 20 | 20 |
| line speed | m/minute | 60 | 60 |
| temperature of clip | °C | 60 | 20 |
| longitudinal-transverse tension | N | 25 | 25 |
| film width | mm in width | 260 | 260 |
| tension | N/m in width | 96 | 96 |
| ambient temperature upon holding | °C | 15 | 15 |
| site temperature | °C | 28 | 28 |
| site-ambient atmosphere upon holding | °C | 13 | 13 |
| surface roughness (fixed part) | µm | 1.5 | 1.5 |
| surface roughness (moving part) | µm | 1.7 | 1.7 |
| contact area | mm²/mm | 1.0 | 1.0 |
| holding pressure | MPa | 0.4 | 0.4 |
| temperature upon longitudinal stretching | °C | 45 | 45 |
| longitudinal stretching ratio | times | 4 | 4 |
| temperatuer upon transverse stretching | °C | 80 | 80 |
| transverse stretching ratio | times | 4 | 4 |
| heat setting temperature | °C | 130 | 130 |
| temperature of cold air against clip | °C | 40 | 12 |
| amount of cold air against clip | N/minute | 20 (one side) | 20 (one side) |
| holding properties | ⊚ ○ × | × | ○ |
| dew condensation on clip | ⊚ ○ × | | dew condensation |
| control of longitudinal- transverse tention | ⊚ ○ × | | |
| faulty release of clip | ⊚ ○ × | | |
| ruptuer | ⊚ ○ × | | |
| slip of clip | ⊚ ○ × | | |

**[Table 4]**

| items | unit | Example 17 | Example 18 | Example 19 | Example 20 |
|---|---|---|---|---|---|
| polylactic acid resin | | PLA : D4 | PLA : D4 | PLA : D4 | PLA : D4 |
| aliphatic polyester | | PBS | PBSA | PBAT | lactic acid copolymer |
| plasticizer | | DALG | DALG | DALG | DALG |
| ratio of polylactic acid resin | % by weight | 72 | 72 | 72 | 72 |
| ratio of aliphatic polyester | % by weight | 8 | 8 | 8 | 8 |
| ratio of plasticizer | % by weight | 20 | 20 | 20 | 20 |
| line speed | m/minute | 60 | 60 | 60 | 60 |
| temperature of clip | °C | 35 | 35 | 35 | 35 |
| longitudinal-transverse tension | N | 25 | 25 | 25 | 25 |
| film width | mm in width | 260 | 260 | 260 | 260 |
| tension | N/m in width | 96 | 96 | 96 | 96 |
| ambient temperature upon holding | °C | 15 | 15 | 15 | 15 |
| site temperature | °C | 28 | 28 | 28 | 28 |
| site-ambient atmosphere upon holding | °C | 13 | 13 | 13 | 13 |
| surface roughness (fixed part) | µm | 1.5 | 1.5 | 1.5 | 1.5 |
| surface roughness (moving part) | µm | 1.7 | 1.7 | 1.7 | 1.7 |
| contact area | mm²/mm in width | 1.0 | 1.0 | 1.0 | 1.0 |
| holding pressure | MPa | 0.4 | 0.4 | 0.4 | 0.4 |
| temperature upon longitudinal stretching | °C | 45 | 45 | 45 | 45 |
| longitudinal stretching ratio | times | 4 | 4 | 4 | 4 |
| temperatuer upon transverse stretching | °C | 80 | 80 | 80 | 80 |
| transverse stretching ratio | times | 4 | 4 | 4 | 4 |
| heat setting temperature | °C | 130 | 130 | 130 | 130 |
| temperature of cold air against clip | °C | 15 | 15 | 15 | 15 |
| amount of cold air against clip | m³/minute | 20 (one side) | 20 (one | 20 side) (one side) | 20 (one side) |
| holding properties | ⊚ ○ × | ○ | ⊚ | ⊚ | ⊚ |
| condensation on clip | | | | | |
| control of longitudinal-transverse tention | | | | | |
| faulty release of clip | | | | | |
| ruptuer | | | | | |
| slip of clip | | | | | |

### INDUSTRIAL APPLICABILITY

The present invention relates to a process for industrially producing a film of a polylactic acid polymer made flexible by a plasticizer.

### BRIEF DESCRIPTION OF THE DRAWINGS

Fig. 1 illustrates longitudinal stretching of a film between rolls of different speeds. Numeral 1 denotes a film. v0 denotes a roll speed before stretching and v denotes a roll speed after stretching. The film is longitudinally stretched at a rate of v0/v. Upon that, the film width W0 before stretching is reduced to W after stretching. The width is reduced because shrinkage stress as described by numeral 3 acts on the film when stretching stress as described by numeral 2 is applied to the film as shown in the lower figure. Referring to the shrinkage behavior, shrinkage in the central portion is small while shrinkage in the edge portion is large as shown by the squares;
Fig. 2 illustrates a holding part of a tenter clip. Numeral 4 denotes a film and numeral 5 denotes the traveling direction of the film. Numeral 6 denotes a portion of a clip that holds the film and numeral 7 denotes a guide roll guiding the film. A film which is not flat suffers from the trouble of the curl at both edges between the guide roll and the holding part of the clip;
Fig. 3 illustrates normal film holding movement of a clip without curl of a film from the cross-sectional direction. Numeral 8 denotes a film and numeral 9 denotes a clip. Since the film remains flat, the film edge portion is not curled and remains flat, and therefore the clip do not push the film out when closed, holding the film properly;

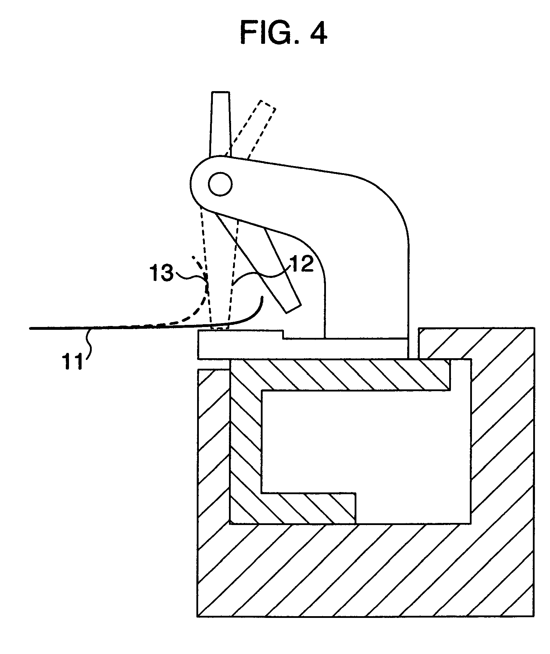

Fig. 4 illustrates a condition where a clip is unable to hold a film due to large curl of the film observed from the cross-sectional direction. Numeral 11 denotes a film and numeral 12 denotes a clip. Since the edge portion of the film is curled, the clip pushes the film out when closed if the edge portion of the film is curled as described by numeral 13, causing holding failure;

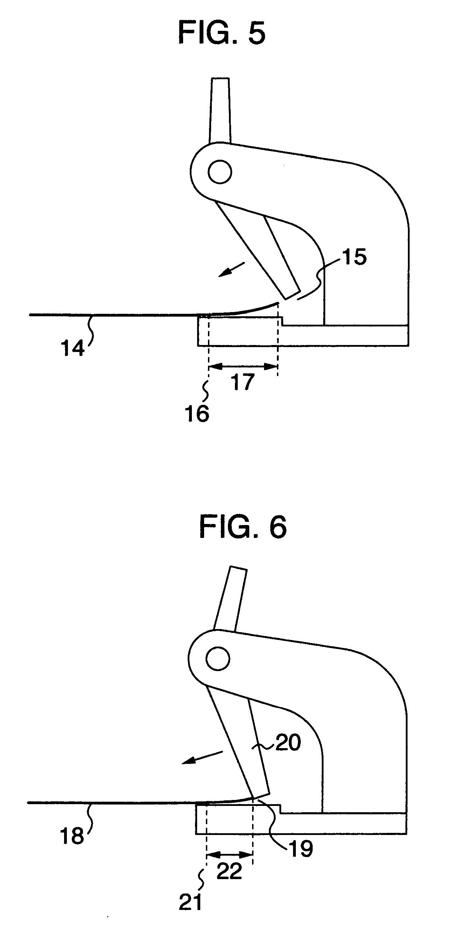

Fig. 5 illustrates the first state of four views illustrating a behavior that enables holding despite the shift of the holding position at the film edge portion due to small curl of the film. Numeral 14 denotes a film and numeral 15 denotes a curled film edge portion. The film edge portion is positioned as indicated by numeral 17 in the figure over the holding position of a clip indicated by numeral 16 in the figure;
Fig. 6 illustrates the second state of the four views. Numeral 18 denotes a film and numeral 19 denotes a curled film edge portion. Upon closing movement of a clip indicated by numeral 20 in the figure, the tip of the clip touches the upper part of the curled film, making the film edge portion move toward the outside of the clip. As a result, the film edge portion is positioned as indicated by numeral 22 in the figure over the holding position of a clip indicated by numeral 21 in the figure;

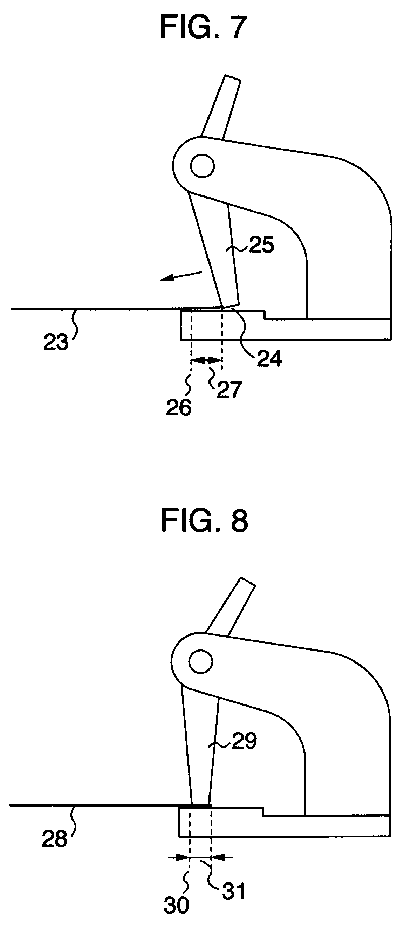

Fig. 7 illustrates the third state of the four views. Numeral 23 denotes a film and numeral 24 denotes a curled film edge portion. With the advance of the closing movement of a clip indicated by numeral 25 in the figure, the tip of the clip pushes the upper curled part of the film, making the film edge portion move further toward the outside of the clip. As a result, the film edge portion is positioned as indicated by numeral 27 in the figure over the holding position of a clip indicated by numeral 26 in the figure;
Fig. 8 illustrates the last state of the four views. Numeral 28 denotes a film. When a clip indicated by numeral 29 in the figure lands on a film edge portion and completes the closing movement, the film edge portion is positioned as indicated by numeral 31 in the figure over the holding position of a clip indicated by numeral 30 in the figure. Through Figs. 5 to 8, the distance has a relationship of 17>22>27>31, which indicates the shift of the holding position of clips in the film width direction;

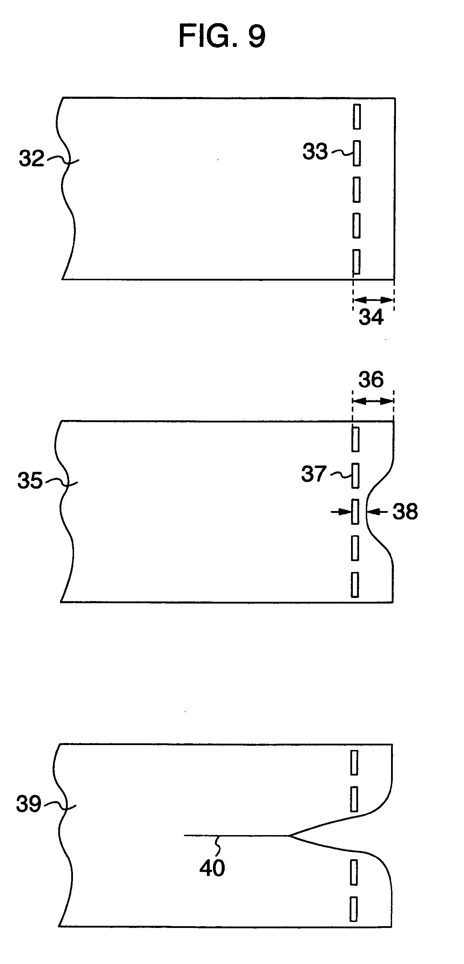

Fig. 9 is an overhead view of holding marks of clips at a film edge portion. In a film indicated by numeral 32, the film edge portion is not curled and clips properly hold the film as shown in Fig. 3. Holding marks 33 are at a constant distance 34 from the film edge portion. In a film indicated by numeral 35, holding positions are shifted due to the film curl as shown in Figs. 5 to 8. While a normal holding position has distance 36 from the film edge, holding positions 37 are shifted as shown by distance 38. In a film indicated by numeral 39, clips are largely shifted from the film edge as shown in Fig. 4. In such a case, film rupture due to stretching stress occurs from the portion which is not held as indicated by numeral 40;
Fig. 10 illustrates a tenter of an outer return system. Numeral 41 denotes the traveling direction of the film. Numeral 42 denotes a tenter oven and numeral 43 denotes a bath for cooling a return rail. Numeral 44 denotes a wheel supporting clips at the tenter entrance. As shown in the figure, although a bath for cooling return clips can be placed outside the oven in the outer return system, structurally wheels at the tenter entrance cannot follow the film width; and
Fig. 11 illustrates a tenter of an inner return system. Numeral 45 denotes the traveling direction of the film. Numeral 46 denotes a tenter oven and numeral 47 denotes a bath for cooling return clips. Numeral 48 denotes a wheel supporting clips at the tenter entrance. As shown in the figure, the distance between wheels can be changed in response to the change in the film width in the inner return system. However, a bath for cooling return rail must be placed inside the heated tenter oven.

### DESCRIPTION OF REFERENCE NUMERALS

- v0: roll speed before stretching
- v: roll speed after stretching
- W0: film width before stretching
- W: film width after stretching
- 1: film
- 2: stretching stress
- 3: shrinkage stress
- 4: film
- 5: travelling direction of film
- 6: part of film to be held by clip
- 7: guide roll
- 8: film
- 9: clip
- 10: film edge portion
- 11: film
- 12: clip
- 13: film edge portion
- 14: film
- 15: film edge portion
- 16: holding position of clip
- 17: distance between film edge and holding position
- 18: film
- 19: film edge
- 20: clip
- 21: holding position of clip
- 22: distance between film edge and holding position
- 23: film
- 24: film edge
- 25: clip
- 26: holding position of clip
- 27: distance between film edge and holding position
- 28: film
- 29: clip
- 30: holding position of clip
- 31: distance between film edge and holding position
- 32: properly held film
- 33: holding mark
- 34: distance between film edge and holding position
- 35: film with shifted holding position
- 36: distance between film edge and holding position
- 37: holding mark
- 38: distance between film edge and holding position
- 39: film in which some portions are not held
- 40: film rupture from portion not held
- 41: travelling direction of film
- 42: tenter oven
- 43: bath for cooling clip
- 44: wheel for clip
- 45: travelling direction of film
- 46: tenter oven
- 47: bath for cooling clip
- 48: wheel for clip

## Claims

1. A process for producing a polylactic acid film, comprising longitudinally stretching an unstretched film of a polylactic acid resin to which 10 to 50% by weight of a plasticizer is added using a longitudinal stretching machine under a condition that the film after longitudinal stretching has a thickness of 12 to 100 µm, and transversely stretching the film using a tenter type transverse stretching machine, thereby producing a sequentially biaxially stretched film, wherein a temperature of a clip built in the tenter type transverse stretching machine is adjusted to 70°C or lower when the film after longitudinal stretching passes through a guide roll, comes into contact with and is bitten by the clip.

2. The process according to claim 1, wherein an ambient temperature around the film after longitudinal stretching is 30°C or lower when the film passes through a guide roll, comes into contact with and is bitten by a clip built in the tenter type transverse stretching machine, and a tension on the film between the longitudinal stretching machine and the transverse stretching machine is adjusted to 10 to 800 N/m in width.

3. The process according to claim 1 or 2, wherein the clip holding the film has a centerline average roughness of 0.2 to 30 µm on the metal surface which comes into contact with the film, a contact area per 1 mm in a flow direction of 0.2 to 5.0 mm² and a holding pressure of 0.1 to 7.0 MPa.
